Europäisches Patentamt

European Patent Office

Office européen des brevets

(19)

(11) Veröffentlichungsnummer: **0 320 839**

**A2**

(12) **EUROPÄISCHE PATENTANMELDUNG**

(21) Anmeldenummer: **88120698.1**

(22) Anmeldetag: **10.12.88**

(51) Int. Cl.⁴: **B29B 15/12 , B29C 67/14**

(30) Priorität: **17.12.87 DE 3742833**

(43) Veröffentlichungstag der Anmeldung:
**21.06.89 Patentblatt 89/25**

(84) Benannte Vertragsstaaten:
**CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Winkler, Matthias, Dr.**
**Buchsstrasse 28**
**D-7318 Lenningen 1(DE)**
Erfinder: **Ittemann, Peter, Dr.**
**Wilhelm-Busch-Strasse 87**
**D-6700 Ludwigshafen(DE)**
Erfinder: **Matthies, Hans Georg, Dr.**
**Homburger Strasse 2**
**D-6700 Ludwigshafen(DE)**

(54) Verfahren zur Herstellung von Faserverbundwerkstoffen.

(57) Die Erfindung betrifft ein Verfahren zur Herstellung von Faserverbundwerkstoffen durch Imprägnieren eines Gewebes, in welchem parallele Verstärkungsfasern durch Thermoplastfäden zusammengehalten werden, in einem Tränkbad, welches 0 bis 50 Gew.% Thermoplast und 100 bis 0 Gew.% eines Lösungsmittels für den Thermoplasten enthält, Verdampfen des Lösungsmittels und Konfektionieren zum Verbundwerkstoff. Aus den Werkstoffen können Fertigteile für den Kraftfahrzeugsektor und für die Luft- und Raumfahrt hergestellt werden.

EP 0 320 839 A2

## Verfahren zur Herstellung von Faserverbundwerkstoffen

Die Erfindung betrifft ein Verfahren zur Herstellung von Faserverbundwerkstoffen, bei dem parallele Verstärkungsfasern mit einer Lösung eines thermoplastischen Polymeren imprägniert und das Lösungsmittel verdampft wird. Ein derartiges Verfahren ist z.B. in DE-A-36 22 351 (US-A-4 738 868) beschrieben. Als Verstärkungsfasern werden dort Einzel-Rovings, parallele Faserbündel, z.B. unidirektionale Faserbändchen einer Breite von 0,3 bis 10 mm, sowie Gewebebänder aus Glas, Kohlenstoff oder aromatischem Polyamid eingesetzt.

Übliche Anlagen zur Herstellung von Prepreg-Bahnen auf Basis von duroplastischen Polymeren sind im allgemeinen etwa 10 bis 200 cm breit. Versucht man, so breite Gelege aus parallelen Verstärkungsfasern in einem Bad mit einer Lösung eines thermoplastischen Polymeren zu imprägnieren, so stößt man auf praktische Probleme: Da die Gelege aus einer Vielzahl von parallel geführten Rovings bestehen, und die Rovings jeweils für sich auf einer Spule aufgewickelt sind, müßte man einige Hundert Spulen auf einem Spulenbaum anordnen und von dort die Rovings gleichzeitig abwickeln, zusammenführen und dann durch das Tränkbad führen. Selbst wenn man dieses apparative Problem durch aufwendige Anordnungen lösen würde, dann ergäben sich bei der anschließenden Trocknung der imprägnierten Bahn weitere Schwierigkeiten: Die meisten Thermoplasten sind nicht allzu gut in organischen Lösungsmitteln löslich, so daß verhältnismäßig verdünnte Lösungen verwendet werden müssen. Aus der imprägnierten Bahn müssen deshalb große Mengen Lösungsmittel verdampft werden. Die dabei sich ergebende Volumenverringerung führt zu Spannungen in der Bahn, was - wegen des fehlenden Querzusammenhalts der Verstärkungsfasern - Querrisse zur Folge haben kann. Aus diesen Gründen werden zur Herstellung breiter Prepreg-Bahnen auf Basis von thermoplastischen Polymeren im allgemeinen Gewebe aus Verstärkungsfasern eingesetzt. Dies ist aber in solchen Fällen nicht möglich, in denen man Faserverbundwerkstoffe herstellen will, die wegen ihrer speziellen Beanspruchung nur in einer Vorzugsrichtung verstärkt sein sollen.

Der Erfindung lag also die Aufgabe zugrunde, ein Verfahren zur Herstellung von breiten Bahnen aus unidirektional verstärkten Faserverbundwerkstoffen auf Basis von thermoplastischen Polymeren zu entwickeln.

Diese Aufgabe wird gelöst, wenn man Verstärkungsfasern in Form eines Gewebes einsetzt, bei dem parallele Verstärkungsfasern durch Thermoplastfäden zusammengehalten werden. Dieses Gewebe wird durch ein Bad geführt, welches 0 bis 50 Gew.% Thermoplast und 100 bis 50 Gew.% eines Lösungsmittels für den Thermplasten enthält.

Bevorzugt werden dabei solche Gewebe eingesetzt, die in Kettrichtung die Verstärkungsfasern und senkrecht dazu in Schußrichtung die Thermoplastfäden enthalten. Grundsätzlich können auch multiaxiale Gewebe hergestellt und erfindungsgemäß eingesetzt werden. Das sind Gewebe, bei denen Verstärkungsfasern in unterschiedlichen Ebenen unterschiedlich orientiert sind und die durch Thermoplastfäden zusammengehalten werden.

Die Verstärkungsfasern bestehen aus Glas, Kohlenstoff oder aromatischen Polyamiden. Die Fasern werden zweckmäßigerweise in Form von 1 bis 10 mm breiten Rovingbändchen eingesetzt, die parallel gelegt und mit Hilfe der Thermoplastfäden verwebt werden. Als Thermoplaste werden solche verwendet, die in organischen Lösungsmitteln löslich sind, wie z.B. Polystyrol, amorphe Polyamide und Polycarbonat, bevorzugt Polymere mit einer Glastemperatur oberhalb von 120°C, wie z.B. Polyethersulfone, Polysulfon, Polyetherimide, Polyaryletherthioethernitril, Polyaryletherthioethersulfid. Die Thermoplaste werden auf übliche Weise, vorzugsweise aus der Schmelze, zu Multifilamentfäden und einem Garngewicht von 5 bis 2500 tex und einer Einzelfilamentzahl von 5 bis 5000 versponnen.

Die Herstellung der erfindungsgemäß einzusetzenden Gewebe kann auf übliche Weise auf Webstühlen erfolgen. Bevorzugt besteht das Gewebe zu 3 bis 60, insbesondere zu 5 bis 50 Gew.% aus Thermoplast. Das Flächengewicht der Gewebe beträgt vorzugsweise 80 bis 1200 g/m², insbesondere 100 bis 600 g/m², ihre Breite 10 bis 200 cm, vorzugsweise 50 bis 165 cm.

Das Gewebe wird erfindungsgemäß durch ein Tränkbad geführt, das 0 bis 50 Gew.% Thermoplast und 100 bis 50 % eines Lösungsmittels für den Thermoplasten enthält. Als Lösungsmittel wird bevorzugt Dichlormethan eingesetzt. Auch eine Mischung von Dichlormethan und Chloroform (z.B. nach EP-A-116 282) ist geeignet, in besonderen Fällen können auch höhersiedende Lösungsmittel, wie z.B. Dimethylformamid oder N-Methylpyrrolidon verwendet werden.

Das Imprägnieren des faserförmigen Verstärkungsmaterials mit der Thermoplastlösung wird auf übliche Weise durchgeführt, indem man das Gewebe durch ein Tränkbad zieht, wobei durch geeignete Umlenkwalzen die Tränkintensität verstärkt werden kann. Die Viskosität der Lösung kann dabei in weiten Grenzen zwischen 10 und 20.000, vorzugsweise zwischen 200 und 5.000 mPas eingestellt werden.

Beim Durchlaufen des Tränkbads quillt der Thermoplastfaden des Gewebes mit Lösungsmittel an, und der Thermoplast wird durch Kapillarkräfte gleichmäßig in den Verstärkungsfasern verteilt. Die Verstärkungsfasern nehmen weiteren Thermoplasten aus der Lösung auf. Vorzugsweise werden in der Thermoplastlösung und im Thermoplastfaden die gleichen Polymeren eingesetzt, für Spezialzwecke können aber auch verschiedenartige Polymere eingesetzt werden. Das Gewichtsverhältnis von Thermoplast in der Lösung zu Thermoplast im Gewebe kann in weiten Grenzen zwischen 70:30 und 0:100 schwanken. Nach dem Durchlaufen des Tränkbads wird das Gewebe durch Abquetschwalzen oder einen Abquetschspalt geführt, wodurch der Thermoplastgehalt des Faserverbundwerkstoffs gezielt eingestellt werden kann. Anschließend durchlaufen die imprägnierten Fasern eine Trockenstrekke, vorzugsweise einen vertikalen Turm, in dem auf übliche Weise das Lösungsmittel verdampft wird.

In einer bevorzugten Ausführungsform der Erfindung wird das Gewebe mit einer Lösung imprägniert, die 5 bis 30 Gew.% Thermoplast enthält. Dadurch, daß ein Teil des Thermoplasten im Gewebe enthalten ist, brauchen nur verhältnismäßig geringe Mengen an Imprägnierlösung angewandt werden, so daß auch die Menge des zu verdampfenden Lösungsmittels reduziert ist. Die erspart einerseits Lösungsmittel und Energiekosten, andererseits verringert sich die Neigung der imprägnierten Bahn zur Ausbildung von Querrissen.

Im Extremfall kann man nach einer Ausführungsform arbeiten, bei der das Lösungsmittelbad überhaupt keinen Thermoplasten enthält.

Die getrockneten imprägnierten Fasermaterialien können in einem Glättkalander zur Erzeugung einer gleichmäßigen Oberfläche egalisiert werden; sie werden dann zu einem Halbzeug konfektioniert, indem sie zu Platten geschnitten oder auf Spulen gewickelt werden. Das erhaltene Halbzeug kann durch Verformen und Aushärten zu Fertigteilen verarbeitet werden, die im Kraftfahrzeugsektor, im Schiffsbau sowie in der Luft- und Raumfahrt eingesetzt werden können.

Die Faserverbundwerkstoffe enthalten vorzugsweise 40 bis 70, insbesondere 50 bis 60 Vol.% Verstärkungsfasern. Sie zeichnen sich durch eine hohe Bruchzähigkeit, gute Lagerbeständigkeit, schnelle Verarbeitbarkeit und ein gutes Brandverhalten aus.

Beispiel 1

Ein Glasroving (SILENKA EC 14 P 185) von 1200 tex Garngewicht und ein Multifilamentfaden (140 Einzelfilamente) aus dem Polyethersulfon ULTRASON E 2000 mit einem Garngewicht von 900 tex wurden zu einem Gewebe (Leinwandbindung) verwoben. Die Kette des Gewebes bestand ausschließlich aus dem Glasfaserroving (4,8 Fäden/cm), der Schuß ausschließlich aus dem Thermoplastgarn (3,2 Fäden/cm). Dieses Gewebe wurde kontinuierlich durch ein Dimethylformamidbad gezogen. Die Verweilzeit im Bad betrug ca. 90 s. Hierbei quollen die Polyethersulfonfäden an, ohne sich aufzulösen. Das Lösungsmittel wurde in auf 180°C beheizten Warmlufttrocknern kontinuierlich entfernt. Nach der Trocknung wurde ein unidirektional mit Glasfasern verstärktes Polyethersulfon-Prepreg von hohem Durchtränkungsgrad und guter Qualität erhalten. Das Prepreg besaß ein Flächengewicht von 870 g/m$^2$ und einem Verstärkungsfasergehalt von 67 Gew.%.

Beispiel 2

Ein Glasroving (SILENKA EC 14 P 185) von 1200 tex Garngewicht und ein Multifilamentfaden (35 Einzelfilamente) aus dem Polyethersulfon ULTRASON E 2000 mit einem Garngewicht von 225 tex wurden zu einem Atlasgewebe (A 1/5) verwoben. Die Kette des Gewebes bestand ausschließlich aus dem Glasfaserroving (4,8 Fäden/cm), der Schuß ausschließlich aus dem Thermoplastgarn (1,6 Fäden/cm). Das Gewebe besaß ein Flächengewicht von 648 g/m$^2$. Dieses Gewebe wurde kontinuierlich durch eine Lösung von 20 Gew.% Polyethersulfon (ULTRASON E 2000) in Methylenchlorid geführt. Die Verweilzeit des Gewebes in der Lösung betrug etwa 90 s. Das Lösungsmittel wurde mittels 80°C beheizten Warmlufttrocknern entfernt. Nach der Trocknung wurde ein unidirektional mit Glasfasern verstärktes Polyethersulfon-Prepreg von hohem Durchtränkungsgrad und guter Qualität erhalten. Das Prepreg besaß ein Flächengewicht von 872 g/m$^2$ und einem Verstärkungsfasergehalt von 66 Gew.%.

**Ansprüche**

1. Verfahren zur Herstellung von unidirektional oder multiaxial verstärkten Faserverbundwerkstoffen durch Imprägnieren von parallelen Verstärkungsfasern mit einer Lösung eines thermoplastischen Polymeren in einem organischen Lösungsmittel, Verdampfen des Lösungsmittels und Konfektionieren zum Verbundwerkstoff, dadurch gekennzeichnet, daß die Verstärkungsfasern in Form eines Gewebes eingesetzt werden, in welchem die parallelen Verstärkungsfasern durch Thermoplastfäden zusammengehalten werden, und daß dieses Gewebe anschließend durch ein Bad geführt wird, welches 0 bis 50 Gew.% Thermoplast und 100 bis 50 Gew.% eines Lösungsmittels für den Thermoplasten enthält.

2. Verfahren zur Herstellung von unidirektional verstärkten Faserverbundwerkstoffen nach Anspruch 1, dadurch gekennzeichnet, daß Gewebe eingesetzt werden, die in Kettrichtung Verstärkungsfasern und in Schußrichtung Thermoplastfäden enthalten.

3. Verfahren nach Anspruch 1, dadurch gekennzeichnet, daß das Gewebe mit einer Lösung imprägniert wird, die 5 bis 30 Gew.% Thermoplast enthält.

4. Verfahren nach Anspruch 1, dadurch gekennzeichnet, daß das Gewebe durch ein Lösungsmittelbad geführt wird, welches keinen Thermoplasten enthält, wobei die im Gewebe befindlichen Thermoplastfäden durch das Lösungsmittel angequollen und der Thermoplast gleichmäßig in den Verstärkungsfasern verteilt wird.

5. Verfahren nach Anspruch 1, dadurch gekennzeichnet, daß in den Thermoplastfäden und in der Thermoplastlösung das gleiche thermoplastische Polymere eingesetzt wird.